(19) Europäisches Patentamt

European Patent Office

Office européen des brevets

(11) **EP 0 958 413 B1**

(12) **FASCICULE DE BREVET EUROPEEN**

(45) Date de publication et mention
de la délivrance du brevet:
**10.07.2002   Bulletin 2002/28**

(21) Numéro de dépôt: **98908037.9**

(22) Date de dépôt: **02.02.1998**

(51) Int Cl.$^7$: **D01F 2/28**, D01F 2/00

(86) Numéro de dépôt international:
**PCT/EP98/00537**

(87) Numéro de publication internationale:
**WO 98/35078 (13.08.1998 Gazette 1998/32)**

(54) **FIBRES CELLULOSIQUES D'ORIGINE CRISTAL-LIQUIDE AYANT UN ALLONGEMENT A LA RUPTURE IMPORTANT ET PROCEDES POUR LES OBTENIR**

CELLULOSEFASERN AUS FLÜSSIGKRISTALLINEN URSPRUNG MIT BEDEUTENDER BRUCHDEHNUNG UND VERFAHREN ZU IHRE HERSTELLUNG

CELLULOSE FIBRES OF LIQUID CRYSTAL ORIGIN WITH HIGH BREAKING ELONGATION AND METHODS FOR OBTAINING SAME

(84) Etats contractants désignés:
**AT DE FR GB NL**

(30) Priorité: **06.02.1997   FR 9701527**

(43) Date de publication de la demande:
**24.11.1999   Bulletin 1999/47**

(73) Titulaire: **MICHELIN RECHERCHE ET TECHNIQUE S.A.**
**CH-1763 Granges-Paccot (CH)**

(72) Inventeurs:
• **MERALDI, Jean-Paul**
**CH-8049 Zurich (CH)**

• **CIZEK, Vlastimil**
**CH-8052 Zurich (CH)**
• **AUBRY, Jean-Claude**
**F-63100 Clermont-Ferrand (FR)**

(74) Mandataire: **Ribière, Joel**
**Michelin & Cie**
**Service SGD/LG/PI-LAD**
**63040 Clermont-Ferrand Cedex 09 (FR)**

(56) Documents cités:
**WO-A-85/05115          WO-A-94/17136**
**WO-A-95/20629          WO-A-97/02292**

## EP 0 958 413 B1

**Description**

La présente invention se rapporte aux fibres en formiate de cellulose et aux fibres en cellulose régénérée à partir de ce formiate, ainsi qu'aux procédés d'obtention de telles fibres lorsqu'ils sont mis en oeuvre à partir de solutions cristal-liquide de formiate de cellulose, i.e. de solutions fortement concentrées en polymère.

Les solutions cristal-liquide de polymères, dans le domaine du filage, sont de manière connue utilisées pour l'obtention de fibres dites "techniques" possédant des propriétés très élevées de ténacité et de module en extension, combinées à de faibles allongements à la rupture, comme l'ont montré notamment les brevets US-A-3 767 756 portant sur les fibres aramides ou US-A-4 746 694 sur les fibres de polyesters aromatiques. Le filage de solutions cristal-liquide à base de cellulose permet également d'obtenir des fibres cellulosiques à hautes propriétés mécaniques, comme décrit par exemple dans la demande de brevet internationale PCT/CH85/00065 publiée sous le No WO85/05115.

Cette demande WO85/05115 ou les brevets équivalents EP-B-179 822 et US-A-4 839 113 divulguent l'obtention de solutions cristal-liquide de formiate de cellulose, par réaction de la cellulose avec de l'acide formique et de l'acide phosphorique. Ces solutions peuvent être filées selon la technique de "dry-jet-wet spinning" pour obtenir des fibres en formiate de cellulose, ainsi que des fibres en cellulose régénérée après un traitement de régénération de ces fibres en formiate. Comparées à des fibres cellulosiques conventionnelles telles que les fibres rayonne ou viscose, filées à partir de solutions non cristal-liquide, les fibres décrites dans WO85/05115 se caractérisent, en raison du caractère cristal-liquide des solutions de filage dont elles sont issues, par une structure beaucoup plus ordonnée ou orientée et donc par une résistance et un module nettement plus élevés ; leurs ténacités peuvent varier par exemple de 50-60 cN/tex à 80-100 cN/tex voire plus, selon qu'il s'agit de fibres en formiate ou de fibres en cellulose régénérée à partir de ce formiate, leurs modules initiaux pouvant atteindre 3000 à 3500 cN/tex ; leurs valeurs d'allongement à la rupture, en contrepartie, sont faibles, de l'ordre de 3 % à 4 %.

Pour l'obtention de ces fibres à haute résistance et à haut module, l'étape de coagulation est réalisée dans de l'acétone. Or, l'acétone est un produit relativement coûteux, volatil, présentant en outre des risques d'explosion qui nécessitent des mesures de sécurité particulières. De tels inconvénients ne sont pas propres à l'acétone, mais communs, au moins pour certains d'entre eux, à de nombreux liquides organiques utilisés dans l'industrie du filage, notamment comme agents coagulants.

Il était donc tout à fait souhaitable de trouver une alternative à l'emploi d'acétone, en remplaçant cette acétone par un agent coagulant plus avantageux du point de vue industriel et plus facile d'emploi, même au prix d'une diminution des propriétés mécaniques décrites précédemment.

Il se trouve qu'un simple remplacement de l'acétone par de l'eau, dans le procédé de filage selon la demande WO85/05115 précitée, conduit à des fibres ayant des propriétés mécaniques très faibles et qui ne présentent aucun intérêt industriel réel: d'une part leur ténacité est nettement insuffisante pour satisfaire à des applications dites "techniques" (par exemple pour le renforcement d'enveloppes de pneumatiques), d'autre part leur allongement à la rupture est trop faible pour des applications dites "textiles" (par exemple dans l'habillement) nécessitant quant à elles des valeurs d'allongement à la rupture importantes.

Or, la demanderesse a trouvé lors de ses recherches qu'il était possible d'obtenir, grâce à un procédé de filage nouveau et spécifique, une fibre en formiate de cellulose répondant aux exigences d'une application textile, i.e. ayant un allongement à la rupture important, au moins égal à 8 %. Ce procédé de filage spécifique, mis en oeuvre à partir des solutions cristal-liquide à base de formiate de cellulose décrites précédemment, utilise de l'eau comme agent coagulant et non pas de l'acétone ; il est donc particulièrement avantageux.

Ainsi, il est désormais possible en partant des mêmes solutions cristal-liquide à base de formiate de cellulose, et en modifiant la nature de l'agent coagulant, d'obtenir soit des fibres techniques à haute résistance mécanique par coagulation dans l'acétone, soit des fibres textiles à allongement à la rupture élevé par coagulation dans l'eau. L'existence de ces deux voies complémentaires précise le champ d'application industrielle de l'invention de base décrite dans la demande WO85/05115 précitée.

En conséquence. un premier objet de l'invention est une fibre en formiate de cellulose d'origine cristal-liquide, caractérisée par les propriétés suivantes:

a) sous microscope optique de polarisation, ses filaments présentent une structure en bande typique de son origine cristal-liquide;

b) elle vérifie les relations suivantes:

$$DS \geq 2 \ ; \ Ar \geq 8 \ ; \ Te < 45 \ ; \ Mi > 500 \ ; \ Er > 10,$$

DS étant le degré de substitution de la cellulose en groupes formiate dans la fibre (en %). Ar l'allongement à la rupture (en %) de la fibre, Te sa ténacité (en cN/tex), Mi son module initial (en cN/tex) et Er son énergie à la rupture (en J/g).

De manière préférentielle, l'allongement à la rupture Ar est au moins égal à 10 %, plus préférentiellement encore au moins égal à 12 %.

Cette combinaison de propriétés est tout à fait inattendue pour une fibre en formiate de cellulose d'origine cristal-liquide : en effet, le caractère hautement ordonné des solutions cristal-liquide de départ est à priori incompatible avec une fibre dont l'allongement à la rupture peut atteindre des valeurs de 8 à 12 %, aucun document de l'état de la technique ne décrivant d'ailleurs une fibre en formiate de cellulose, d'origine cristal-liquide, ayant un allongement à la rupture dépassant des valeurs de 4 à 4,5 %.

L'invention concerne également un procédé pour l'obtention de la fibre en formiate de cellulose ci-dessus, par filage et coagulation dans l'eau d'une solution cristal-liquide de formiate de cellulose selon la méthode dite de "dry-jet-wet-spinning", ce procédé étant caractérisé en ce qu'il comporte les étapes suivantes:

- a) on part d'une solution de formiate de cellulose dans au moins un acide phosphorique, cette solution étant optiquement anisotrope à température ambiante et au repos;
- b) on extrude cette solution à travers une filière à une température (notée Tf) telle que la solution est optiquement anisotrope si elle est au repos;
- c) on étire ensuite la solution ainsi extrudée à travers une couche non coagulante, de préférence de l'air;
- d) puis, par passage à travers des moyens de coagulation, on coagule la solution ainsi étirée dans de l'eau dont la température (notée Tc) est supérieure à 5°C, la contrainte de tension (notée $\sigma_c$) subie par la fibre, en sortie des moyens de coagulation, étant maintenue à une valeur inférieure à 5 cN/tex;
- e) on lave la fibre ainsi formée, et on la sèche éventuellement.

De préférence, la concentration en formiate de cellulose dans la solution de filage est au moins égale à 16 %, plus préférentiellement égale ou supérieure à 22 % (% en poids). De telles concentrations. inhabituelles pour le filage de fibres cellulosiques à usage textile, telles que la fibre viscose par exemple, sont particulièrement avantageuses dans la mesure où elles permettent de réduire la quantité de solvant dans la solution de filage ; d'autre part elles rendent possible la mise en oeuvre du procédé de filage de l'invention à des vitesses particulièrement élevées.

La fibre en formiate de cellulose de l'invention peut être utilisée comme précurseur d'une fibre en cellulose régénérée qui constitue un autre objet de l'invention.

L'invention concerne en particulier une fibre en cellulose régénérée à partir du formiate de cellulose, d'origine cristal-liquide, ayant elle-même un allongement à la rupture important ; cette fibre est caractérisée par les propriétés suivantes:

a) sous microscope optique de polarisation, ses filaments présentent une structure en bande typique de son origine cristal-liquide;

b) elle vérifie les relations suivantes:

$$0 < DS < 2 \; ; \; AR \geq 8 \; ; \; TE < 45 \; ; \; MI > 500 \; ; \; ER > 10,$$

DS étant le degré de substitution de la cellulose en groupes formiate dans la fibre (en %), AR l'allongement à la rupture de la fibre (en %), TE sa ténacité (en cN/tex), MI son module initial (en cN/tex) et ER étant son énergie à la rupture (en J/g).

L'invention concerne aussi un procédé pour l'obtention de la fibre en cellulose régénérée ci-dessus, comportant les étapes suivantes:

-a) on part d'une fibre en formiate de cellulose conforme à l'invention;
-b) on traite cette fibre en formiate par passage à travers des moyens de régénération, de lavage puis de séchage, de telle manière que les contraintes de tension (notées $\sigma_r$) subies par la fibre à l'entrée de chacun desdits moyens soient inférieures à 5 cN/tex.

L'invention concerne également l'utilisation des fibres de l'invention dans le domaine textile, notamment dans l'habillement ou l'ameublement, ces fibres pouvant se trouver par exemple à l'état de fibres continues, tissées ou non tissées, tricotées, ou à l'état de fibres courtes ("staple fibers").

L'invention, ainsi que ses avantages, seront aisément compris à l'aide de la description et des exemples non limitatifs qui suivent.

## I. MESURES ET TESTS UTILISES

### I-1. Degré de polymérisation

Le degré de polymérisation est noté DP.

On mesure le DP de la cellulose de manière connue, cette cellulose étant sous forme de poudre, ou transformée préalablement en poudre.

On détermine tout d'abord la viscosité inhérente (IV) de la cellulose en solution, selon la norme suisse SNV 195 598 de 1970, mais à différentes concentrations qui varient entre 0,5 et 0,05 g/dl. La viscosité inhérente est définie par l'équation:

$$IV = (1/C_e) \times Ln\ (t_1/t_0),$$

dans laquelle $C_e$ représente la concentration en cellulose sèche, $t_1$ représente la durée d'écoulement de la solution diluée de polymère, $t_0$ représente la durée d'écoulement du solvant pur, dans un viscosimètre de type Ubbelhode, et Ln représente le logarithme népérien. Les mesures sont réalisées à 20°C.

La viscosité intrinsèque [η] est ensuite déterminée par extrapolation à concentration nulle de la viscosité inhérente IV.

La masse moléculaire moyenne en poids $M_w$ est donnée par la relation de Mark-Houwink :

$$[\eta] = K \times M_w^{\alpha}$$

où les constantes K et $\alpha$ sont respectivement :

K = 5,31 x $10^{-4}$ ; $\alpha$ = 0,78, ces constantes correspondant au système de solvant utilisé pour la détermination de la viscosité inhérente. Ces valeurs sont données par L. Valtasaari dans le document Tappi 48, 627 (1965).

Le DP est finalement calculé selon la formule:

$$DP = (M_w)/162,$$

162 étant la masse moléculaire du motif élémentaire de la cellulose.

Lorsqu'il s'agit de déterminer le DP de la cellulose à partir de formiate de cellulose en solution, on doit isoler tout d'abord ce formiate, puis régénérer la cellulose.

On procède alors comme suit: on coagule tout d'abord la solution avec de l'eau dans un appareil à disperser. Après filtration et lavage avec de l'acétone, on obtient une poudre qui est ensuite séchée dans une étuve sous vide à 40°C pendant au moins 30 minutes. Après avoir isolé le formiate, on régénère la cellulose en traitant ce formiate à reflux avec de la soude normale. On lave à l'eau la cellulose obtenue, on la sèche et on mesure le DP comme décrit précédemment.

### I-2. Degré de substitution

Le degré de substitution de la cellulose en formiate de cellulose est encore appelé degré de formylation.

Le degré de substitution déterminé par la méthode décrite ici donne le pourcentage de fonctions alcool de la cellulose qui sont estérifiées, c'est-à-dire transformées en groupes formiate. Ceci signifie qu'un degré de substitution de 100 % est obtenu si les trois fonctions alcool du motif de cellulose sont toutes estérifiées, ou qu'un degré de substitution de 30 %, par exemple, est obtenu si 0,9 fonction alcool sur trois, en moyenne, est estérifiée.

Le degré de substitution est mesuré différemment selon que l'on caractérise du formiate de cellulose (formiate en solution, ou fibres en formiate) ou des fibres en cellulose régénérée à partir du formiate de cellulose.

### I-2.1. Degré de substitution sur le formiate de cellulose:

Si le degré de substitution est mesuré sur du formiate de cellulose en solution, ce formiate est tout d'abord isolé de la solution comme indiqué précédemment au paragraphe I-1. S'il est mesuré sur des fibres en formiate, on coupe préalablement ces fibres en morceaux de 2 à 3 cm de long.

On pèse avec précision 200 mg de formiate de cellulose ainsi préparé et on les introduit dans un Erlenmeyer. On ajoute 40 ml d'eau et 2 ml de soude normale (NaOH 1 N). On chauffe à 90°C à reflux pendant 15 minutes sous azote. On régénère ainsi la cellulose en retransformant les groupes formiate en groupes hydroxyle. Après refroidissement, la soude en excès est titrée en retour avec une solution d'acide chlorhydrique décinormale (HCl 0,1 N), et on en déduit ainsi le degré de substitution.

I-2.2. Degré de substitution sur les fibres en cellulose régénérée:

Environ 400 mg de fibre sont coupés en morceaux de 2 à 3 cm de long, puis pesés avec précision et introduits dans un Erlenmeyer de 100 ml contenant 50 ml d'eau. On ajoute 1 ml de soude normale (NaOH 1N). L'ensemble est mélangé à température ambiante, pendant 15 minutes. On régénère ainsi complètement la cellulose en transformant en groupes hydroxyle les derniers groupes formiate qui avaient résisté à la régénération conduite, après leur filage, directement sur des fibres continues. La soude en excès est titrée avec une solution d'acide chlorhydrique décinormale (HCl 0,1 N), et on en déduit ainsi le degré de substitution.

Dans la présente description, le degré de substitution est noté DS lorsqu'il est mesuré sur des fibres, qu'il s'agisse de fibres en formiate de cellulose ou de fibres en cellulose régénérée à partir de ce formiate.

I-3. Propriétés optiques des solutions

L'isotropie ou l'anisotropie optique des solutions est déterminée en plaçant une goutte de solution à étudier entre polariseur et analyseur linéaires croisés d'un microscope optique de polarisation (Olympus type BH2), puis en observant cette solution au repos, c'est-à-dire en l'absence de contrainte dynamique, à la température ambiante.

De manière connue, une solution optiquement anisotrope, dite aussi cristal-liquide, est une solution qui dépolarise la lumière, c'est-à-dire qui présente, ainsi placée entre polariseur et analyseur linéaires croisés, une transmission de la lumière (texture colorée). Une solution optiquement isotrope est une solution qui, dans les mêmes conditions d'observation, ne présente pas la propriété de dépolarisation ci-dessus, le champ du microscope restant noir.

I-4. Propriétés mécaniques des fibres

Par "fibres", on entend ici des fibres multifilamentaires (encore appelées "filés"), constituées de manière connue d'un grand nombre de filaments élémentaires. Toutes les propriétés mécaniques ci-après sont mesurées sur des fibres ayant été soumises à un conditionnement préalable. Par "conditionnement préalable", on entend le stockage des fibres pendant au moins 24 heures, avant mesure, dans une atmosphère standard selon la norme européenne DIN EN 20139 (température de $20 \pm 2°C$ ; hygrométrie de $65 \pm 2$ %). Pour des fibres cellulosiques, un tel conditionnement préalable permet de stabiliser leur taux d'humidité à un niveau d'équilibre inférieur à 15 % en poids de fibre sèche.

Le titre des fibres est déterminé sur au moins trois échantillons, chacun correspondant à une longueur de 50 m, par pesée de cette longueur de fibre. Le titre est donné en tex (poids en grammes de 1000 m de fibre).

Les propriétés mécaniques en extension (ténacité, module initial, allongement et énergie à la rupture) sont mesurées de manière connue à l'aide d'une machine de traction ZWICK GmbH & Co (Allemagne) de type 1435 ou de type 1445. Les fibres, après avoir reçu une faible torsion de protection préalable (angle d'hélice de 6° environ), subissent une traction sur une longueur initiale de 400 mm à une vitesse nominale de 200 mm/min. Tous les résultats donnés sont une moyenne de 10 mesures.

La ténacité (force-rupture divisée par le titre) et le module initial sont indiqués en cN/tex (centinewton par tex - rappel: 1 cN/tex égal à environ 0,11 g/den (gramme par denier)). Le module initial est défini comme la pente de la partie linéaire de la courbe Force-Allongement, qui intervient juste après une prétension standard de 0,5 cN/tex. L'allongement à la rupture est indiqué en pourcentage. L'énergie à la rupture est donnée en J/g (joule par gramme), c'est-à-dire par unité de masse de fibre.

I-5. Propriétés optiques des fibres

Pour la détection et l'observation de la structure en bande des fibres, on utilise un microscope optique de polarisation identique à celui utilisé pour l'étude des solutions (voir § I-3 ci-dessus), en plaçant des filaments de la fibre entre polariseur et analyseur croisés. Pour faciliter la détection de la structure en bande, les filaments sont de préférence placés dans une position proche de l'extinction.

De manière classique, chaque filament à tester est placé sur une lame porte-objet, imprégné d'un liquide d'indice approprié pour la cellulose, puis le tout est recouvert d'une lamelle couvre-objet. Le filament est observé tel quel, par transparence, sous un grossissement de 200 à 1000. Un grossissement de 400 convient très bien dans la majorité des cas. Pour des grossissements de 1000, on utilise de manière connue un objectif à immersion qui nécessite, avant mise en place de ce dernier, le dépôt d'un liquide d'immersion sur la lamelle couvre-objet.

## II. CONDITIONS DE REALISATION DE L'INVENTION

On décrit tout d'abord la réalisation des solutions de filage, puis le filage de ces solutions pour l'obtention de fibres en formiate de cellulose. Dans un troisième paragraphe est décrite la régénération des fibres en formiate de cellulose, pour l'obtention des fibres en cellulose régénérée à partir du formiate.

II-1. Réalisation des solutions de filage

Les solutions de formiate de cellulose sont réalisées en mélangeant de la cellulose, de l'acide formique, et de l'acide phosphorique ou un liquide à base d'acide phosphorique, comme indiqué par exemple dans la demande WO 85/05115 précitée.

La cellulose peut se présenter sous différentes formes, notamment sous forme d'une poudre, préparée par exemple par pulvérisation d'une plaque de cellulose brute. De préférence, sa teneur initiale en eau est inférieure à 10 % en poids, et son DP compris entre 500 et 1000.

L'acide formique est l'acide d'estérification, l'acide phosphorique (ou le liquide à base d'acide phosphorique) étant le solvant du formiate de cellulose, appelé "solvant" ou encore "solvant de filage" dans la description ci-après. En général, l'acide phosphorique utilisé est de l'acide orthophosphorique ($H_3PO_4$), mais on peut utiliser d'autres acides phosphoriques, ou un mélange d'acides phosphoriques. L'acide phosphorique peut, selon les cas, être utilisé solide, à l'état liquide, ou bien dissous dans l'acide formique.

De préférence la teneur en eau de ces deux acides est inférieure à 5 % en poids ; ils peuvent être utilisés seuls ou éventuellement contenir, en faibles proportions, d'autres acides organiques et/ou minéraux, tels que l'acide acétique ou l'acide sulfurique par exemple.

Conformément à la description faite dans la demande WO 85/05115 précitée, la concentration en cellulose de la solution, notée "C", peut varier dans une large mesure, par exemple entre 10 % et 30 % ; cette concentration C est le pourcentage en poids de cellulose sur le poids total de la solution, calculé sur la base d'une cellulose non estérifiée. Le rapport pondéral (acide formique/acide phosphorique) peut être également ajusté dans une large plage.

Lors de la réalisation du formiate de cellulose, l'utilisation de l'acide formique et de l'acide phosphorique permet d'obtenir à la fois un degré de substitution élevé en formiate de cellulose, en général supérieur à 20 %, sans diminution excessive du degré de polymérisation initial de la cellulose, ainsi qu'une répartition homogène de ces groupes formiate, à la fois dans les zones amorphes et dans les zones cristallines du formiate de cellulose.

Les moyens de malaxage appropriés pour l'obtention d'une solution sont connus de l'homme du métier: ils doivent être aptes à pétrir, malaxer correctement, de préférence à une vitesse réglable. la cellulose et les acides jusqu'à l'obtention de la solution. Par "solution". on entend ici, de manière connue, une composition liquide homogène dans laquelle aucune particule solide n'est visible à l'oeil nu. Le malaxage peut être conduit par exemple dans un mélangeur comportant des bras en Z, ou dans un mélangeur à vis en continu. Ces moyens de malaxage sont de préférence équipés d'un dispositif d'évacuation sous vide et d'un dispositif de chauffage et de refroidissement permettant d'ajuster la température du mélangeur et de son contenu. afin d'accélérer par exemple les opérations de dissolution, ou de contrôler la température de la solution en cours de formation.

A titre d'exemple, on peut utiliser le mode opératoire suivant:

On introduit dans un malaxeur à double enveloppe, comportant des bras en Z et une vis d'extrusion, un mélange d'acide orthophosphorique (cristallin à 99 %) et d'acide formique, contenant par exemple environ trois quarts d'acide orthophosphorique pour un quart d'acide formique (parties en poids). On ajoute ensuite de la poudre de cellulose dont l'humidité est en équilibre avec l'humidité ambiante de l'air. Le tout est mélangé pendant une période d'environ 1 à 2 heures par exemple, la température du mélange étant maintenue entre 10 et 20°C, jusqu'à l'obtention d'une solution.

Les solutions de filage ainsi obtenues sont prêtes à filer, elles peuvent être transférées directement, par exemple par l'intermédiaire d'une vis d'extrusion placée à la sortie du mélangeur, vers une machine de filage pour y être filées, sans autre transformation préalable que des opérations habituelles telles que des étapes de dégazage ou de filtration par exemple.

Les solutions de filage utilisées pour la mise en oeuvre de l'invention sont des solutions optiquement anisotropes. De préférence, ces solutions présentent au moins une des caractéristiques suivantes (% en poids):

-   leur concentration en cellulose "C" est comprise dans un domaine allant de 16 % à 26 %, et leur concentration en acide formique total notée "F" (c'est-à-dire la part d'acide formique consommée pour l'estérification plus la part d'acide formique libre restant dans la solution finale) est comprise dans un domaine allant de 8 % à 20 % ;
-   le degré de substitution de la cellulose, en solution, est supérieur à 20 %;
-   le DP de la cellulose en solution est compris entre 300 et 900 ;
-   elles contiennent moins de 10 % d'eau.

Plus préférentiellement, ces solutions de filage présentent au moins une des caractéristiques suivantes:

- C est égale ou encore plus préférentiellement supérieure à 22 %, et F est supérieure à 10 %;
- le degré de substitution de la cellulose, en solution, est compris est compris entre 30 % et 45 % ;
- le DP de la cellulose en solution est compris entre 350 et 600.

II-2. Filage des solutions

On considèrera ici le cas général du filage d'une fibre multifilamentaire, i.e. d'une fibre composée d'une pluralité de filaments élémentaires.

Les solutions de filage sont filées selon la technique dite de "dry-jet-wet-spinning": cette technique utilise une couche fluide non coagulante, en général de l'air, placée en sortie de filière, entre la filière et les moyens de coagulation.

En sortie des moyens de malaxage et de dissolution, la solution de filage est transférée vers le bloc de filage où elle alimente une pompe de filature. A partir de cette pompe de filature, on extrude la solution à travers au moins une filière, précédée d'un filtre. C'est au cours du cheminement jusqu'à la filière que la solution est progressivement amenée à la température de filage désirée, comprise généralement entre 30°C et 80°C selon la nature des solutions de filage, cette température étant choisie telle que la solution est optiquement anisotrope si elle est au repos.

On entend donc par "température de filage", notée Tf, la température de la solution de filage au moment de son extrusion à travers la filière. De préférence, Tf est comprise dans un domaine allant de 40°C à 60°C.

Chaque filière peut comporter un nombre variable de capillaires d'extrusion, ce nombre pouvant varier par exemple de 50 à 2000, voire plus. On peut aussi, pour augmenter le titre de la fibre, utiliser plusieurs filières disposées en parallèle dans une même tête de filage. Les capillaires sont généralement de forme cylindrique, leur diamètre pouvant varier par exemple de 50 à 100 µm (micromètres), mais leur section droite peut être adaptée de manière connue pour donner différentes formes aux filaments formés.

En sortie de filière, on obtient donc un extrudat liquide constitué d'un nombre variable de veines liquides élémentaires. Chaque veine liquide élémentaire est étirée (voir ci-après facteur d'étirage au filage) dans une couche fluide non coagulante, avant de pénétrer dans la zone de coagulation. Cette couche fluide non coagulante est de préférence de l'air (d'où le nom d'air-gap), dont l'épaisseur notée Ag peut varier de quelques mm à quelques dizaines de mm (millimètres), par exemple de 5 mm à 35 mm ; de manière connue, on entend par épaisseur Ag de la couche non coagulante la distance séparant la face inférieure de la filière, disposée horizontalement, et l'entrée de la zone de coagulation (surface du liquide coagulant).

Après traversée de la couche non coagulante, toutes les veines liquides ainsi étirées pénètrent dans la zone de coagulation et entrent au contact de l'agent coagulant (ou milieu coagulant). Sous l'action de ce dernier, elles se transforment, par précipitation du formiate de cellulose et extraction du solvant de filage, en filaments solides de formiate de cellulose qui forment ainsi une fibre.

Conformément à l'invention, l'agent coagulant utilisé est de l'eau.

Avantageusement, cette eau de coagulation ne contient aucun additif, mis à part un éventuel agent tensioactif.

La température du milieu coagulant, notée Tc, est un paramètre critique pour la mise en oeuvre de l'invention : elle doit être supérieure à + 5°C ; de préférence Tc est choisie supérieure à 10°C, plus préférentiellement supérieure à 15°C.

On a observé que des températures basses voisines de 5°C, par exemple entre 5°C et 10°C, pouvaient dans certains cas entraîner le collage de certains filaments entre eux au cours de leur formation ("married filaments"). Ceci perturbe les opérations de filage et est généralement préjudiciable à la qualité du filé obtenu ; l'ajout d'un agent tensioactif, par exemple de l'isopropanol ou un savon, par exemple un savon à base de phosphate, est une solution possible pour supprimer ou tout du moins réduire les difficultés ci-dessus.

L'homme du métier saura ajuster par de essais simples d'optimisation la température du milieu coagulant en fonction des caractéristiques particulières de la solution filée et des propriétés mécaniques visées. De manière générale, la température Tc pourra être choisie d'autant plus élevée que la concentration C de la solution de filage sera elle-même plus élevée.

Le taux de solvant de filage (ou plus généralement d'un composé faisant partie de la solution de filage de départ) qui est naturellement apporté par la solution dans l'agent coagulant, au cours de la coagulation, n'est pas un paramètre critique du procédé et peut varier, selon les conditions particulières de mise en oeuvre de l'invention, de quelques % à 10-15 % voire plus (% en poids total d'agent coagulant).

Les moyens de coagulation à employer sont des dispositifs connus contenant le milieu coagulant et dans lesquels circule la fibre en cours de formation. On utilise de préférence un bain disposé sous la filière, en sortie de la couche non coagulante, ce bain étant généralement prolongé à sa base par un tube cylindrique vertical, dit "tube de filage", dans lequel passe la fibre coagulée et circule également le milieu coagulant.

La profondeur totale d'agent coagulant (notée Pc) traversée par les filaments en cours de formation, dans le bain de coagulation, mesurée de l'entrée du bain jusqu'à l'entrée du tube de filage, peut varier dans une large mesure, par exemple de 10 mm à 40 mm, voire plus. Néanmoins, selon les géométries particulières des bains de coagulation employés, on a observé qu'une profondeur faible d'agent coagulant pouvait entraîner elle aussi, dans certains cas, la formation de "married filaments" ; ainsi, de préférence, cette profondeur Pc est choisie supérieure à 10 mm, plus préférentiellement au moins égale à 20 mm.

Pendant la phase de coagulation, on s'efforce de maintenir les tensions subies par la fibre à un niveau aussi bas que possible, étant entendu que la contrainte de tension (notée $\sigma_c$) subie par la fibre en sortie des moyens de coagulation doit être inférieure à 5 cN/tex.

De préférence, la contrainte $\sigma_c$ est maintenue à une valeur inférieure à 2 cN/tex.

De manière connue, cette contrainte $\sigma_c$ est la résultante complexe de nombreux paramètres parmi lesquels on peut citer la viscosité de la solution de filage et donc sa concentration en cellulose C, la température de filage Tf, l'épaisseur Ag de la couche non coagulante, la profondeur de milieu coagulant Pc dans le bain de coagulation, la vitesse de filage, la géométrie de ce bain. L'homme du métier saura ajuster ces différents paramètres afin de maintenir $\sigma_c$ en dessous de 5 cN/tex. Pour contrôler ces tensions, on utilise des tensiomètres connus pouvant fonctionner notamment en milieux liquides:

En sortie des moyens de coagulation, par exemple après un point de renvoi horizontal, la fibre est envoyée vers des moyens de lavage et reprise sur un dispositif d'entraînement, par exemple sur des cylindres motorisés. La vitesse du produit filé, sur ce dispositif d'entraînement, est appelée "vitesse de filage" (ou encore vitesse d'appel ou d'entraînement) et notée Vf: c'est la vitesse de défilement de la fibre à travers l'installation de filage, une fois la fibre formée.

Le rapport entre la vitesse de filage et la vitesse d'extrusion de la solution à travers la filière, définit ce que l'on appelle de manière connue le facteur d'étirage au filage (en abrégé FEF), qui est par exemple dans le cas présent généralement compris entre 2 et 10.

Une fois coagulée, la fibre doit être lavée jusqu'à neutralité. Par "lavage neutre", on entend toute opération de lavage permettant d'extraire de la fibre la totalité ou la quasi-totalité du solvant de filage. Cette opération est avantageusement réalisée avec de l'eau, milieu gonflant naturel de la cellulose. La température de l'eau de lavage n'est pas un paramètre critique du procédé, on peut travailler avec de l'eau à température ambiante (par exemple de 15°C à 20°C) ou à une température plus élevée si nécessaire pour améliorer la cinétique de lavage. On peut employer des moyens de lavage connus, consistant par exemple en des bains ou cabines contenant l'eau de lavage et dans lesquels circule la fibre à laver. Les temps de lavage peuvent varier typiquement de quelques secondes à quelques dizaines de secondes, selon les conditions particulières de mise en oeuvre de l'invention.

Après lavage, la fibre en formiate de cellulose est séchée de manière connue par tout moyen convenable. On peut opérer par exemple par défilement en continu de la fibre sur des rouleaux chauffants ; de manière préférentielle, on utilise une température de séchage inférieure à 200°C, par exemple allant de 150 à 190°C.

De manière avantageuse, le procédé de l'invention peut être mis en oeuvre dans une très large plage de vitesses de filage, pouvant varier par exemple de 50 à 150 m/min voire plus.

Si on veut caractériser ou utiliser la fibre en formiate de cellulose telle quelle, c'est-à-dire ne pas régénérer la cellulose, l'étape de lavage est de préférence conduite de manière à ce que le taux de solvant de filage résiduel, dans la fibre terminée, i.e. lavée et séchée, ne dépasse pas 0,1 % à 0,2 % en poids, par rapport au poids de fibre sèche.

On peut aussi envoyer la fibre en formiate de cellulose ainsi filée, séchée ou non séchée, directement sur les moyens de régénération, en ligne et en continu, dans le but de préparer une fibre en cellulose régénérée à partir du formiate de cellulose.

II-3. Régénération des fibres en formiate

Par fibre en cellulose régénérée à partir du formiate de cellulose on entend ici une fibre dont le degré de substitution en groupes formiate (DS) est compris entre 0 et 2 %, c'est-à-dire que la molécule de cellulose a été débarassée de la quasi-totalité des groupes formiate substituants.

Un procédé de régénération consiste de manière connue à traiter la fibre en dérivé cellulosique dans un milieu régénérant, en général une solution aqueuse de soude, à laver ensuite la fibre ainsi régénérée, puis à la sécher, ces trois opérations étant en principe réalisées en continu sur une même ligne de traitement dite "ligne de régénération".

Le procédé de régénération selon l'invention, pour l'obtention d'une fibre en cellulose régénérée conforme à l'invention ayant un allongement à la rupture élevé, égal ou supérieur à 8 %, comporte les étapes suivantes:

- a) on part d'une fibre en formiate de cellulose conforme à l'invention;
- b) puis on traite la fibre en formiate par passage à travers des moyens de régénération, de lavage puis de séchage, de telle manière que la contrainte de tension (notée $\sigma_r$) subie par la fibre à l'entrée de chacun desdits moyens soit inférieure à 5 cN/tex.

Ce procédé de l'invention est préférentiellement mis en oeuvre avec une solution aqueuse de soude dont la concentration en soude, notée Cs, est au plus égale à 5 % ou au moins égale à 16% (% en poids). Entre 5 % et 16 % en poids de soude, on a constaté en effet que les filaments des fibres en formiate de cellulose pouvaient dans certains cas subir une dissolution partielle et superficielle au cours de la régénération : une telle dissolution, pouvant se traduire notamment par la présence de filaments collés, peut être préjudiciable aux propriétés mécaniques de la fibre, ou à sa mise en oeuvre ultérieure.

La ligne de régénération consiste de manière classique en des moyens de régénération, suivis de moyens de lavage, eux-mêmes suivis de moyens de séchage. Tous ces dispositifs ne sont pas critiques pour la mise en oeuvre de l'invention. Les moyens de régénération et de lavage peuvent consister notamment en des bains. des tuyaux, des bacs, des cabines, dans lesquels circulent le milieu régénérant ou le milieu de lavage. On peut utiliser par exemple des cabines équipées chacunes de deux cylindres motorisés autour desquels vient s'enrouler la fibre à traiter, cette fibre étant alors douchée avec le milieu liquide employé (régénérant ou lavant).

Les temps de séjour dans les moyens de régénération devront bien sûr être ajustés de manière à régénérer les fibres en formiate de manière suffisante et à vérifier ainsi la relation suivante sur la fibre en cellulose régénérée finale:

$$0 < DS < 2.$$

L'homme du métier saura ajuster ces temps de séjour, qui, selon les conditions particulières de mise en oeuvre de l'invention, peuvent varier par exemple de 1 à 2 secondes jusqu'à 1 à 2 dizaines de secondes.

Par convention, selon la présente invention, une fibre dont la cellulose n'est que partiellement régénérée, ayant par exemple un DS de 2 % à 10 %, entre dans la catégorie des fibres en formiate de cellulose.

Le milieu de lavage est de préférence de l'eau, comme pour le filage, utilisée à température ambiante ou à une température plus élevée, si nécessaire, pour augmenter la cinétique de lavage. A cette eau de lavage peut être éventuellement ajouté un agent de neutralisation pour la soude non consommée.

Les moyens de séchage consistent par exemple en des tunnels chauffants ventilés à travers lesquels circule la fibre lavée, ou encore en des cylindres chauffants sur lesquels est enroulée la fibre. La température de séchage n'est pas critique, et peut varier dans une large gamme allant par exemple de 100°C à 200°C, en fonction des conditions particulières de mise en oeuvre de l'invention, notamment selon les vitesses de passage sur la ligne de régénération. On utilise de préférence une température inférieure à 200°C, par exemple de 150°C à 190°C. En sortie des moyens de séchage, la fibre est prélevée sur une bobine réceptrice, et on contrôle son taux d'humidité résiduelle. De manière préférentielle, les conditions de séchage (température et durée) sont ajustées de manière à ce que le taux d'humidité résiduelle soit compris entre 10 % et 15 % en poids de fibre sèche.

Typiquement, les temps de lavage et de séchage nécessaires varient de quelques secondes à quelques dizaines de secondes, selon les moyens employés et les conditions particulières de réalisation de l'invention.

Au cours du passage à travers la ligne de régénération, on utilise des tensions aussi basses que possible, de telle manière que la contrainte de tension $\sigma_r$ subie par la fibre à l'entrée de chacun des moyens de régénération, de lavage puis de séchage soit inférieure à 5 cN/tex. Les tensions étant difficilement mesurables à l'intérieur-même de ces différents moyens, on préfère les contrôler à l'entrée de ces moyens, à l'aide de tensiomètres adaptés.

Conformément à l'invention, les contraintes de tension $\sigma_r$ à l'entrée de chacun des moyens de régénération, de lavage et de séchage sont de préférence maintenues à un niveau inférieur à 2 cN/tex. Dans des conditions industrielles réelles et notamment pour des hautes vitesses de régénération, les limites inférieures de ces contraintes de tension se situent généralement aux environs de 0,1 à 0,5 cN/tex, des valeurs inférieures n'étant pas réalistes d'un point de vue industriel, et même non souhaitables pour la stabilité du procédé et du produit.

La vitesse de régénération (notée Vr), c'est-à-dire la vitesse de passage de la fibre à travers la ligne de régénération, peut varier dans une large gamme, par exemple de 50 m/min à 150 m/min, voire plus.

Le procédé pour l'obtention des fibres en cellulose régénérée de l'invention est préférentiellement mis en oeuvre en ligne et en continu avec le procédé de filage, de telle manière que toute la chaîne de fabrication, de l'extrusion de la solution à travers la filière jusqu'au séchage de la fibre régénérée, soit ininterrompue.

### III. EXEMPLES DE REALISATION

Les exemples qui suivent, conformes ou non conformes à l'invention, sont des exemples de réalisation de fibres en formiate de cellulose, ou de fibres en cellulose régénérée à partir du formiate de cellulose ; ces fibres sont toutes issues de solutions cristal-liquide de formiate de cellulose préparées conformément à la description du chapitre II précédent.

III-1. FIBRES CONFORMES A L'INVENTION

III-1.1. Fibres en formiate de cellulose (tableau 1):

On réalise au total 27 essais de filage de fibres en formiate de cellulose, conformément au procédé de filage de l'invention et aux indications fournies aux paragraphes II-1 et II-2 précédents, à partir de 11 solutions de filage différentes (solutions référencées de A à K).

Le tableau 1 donne à la fois les conditions particulières de réalisation du procédé de l'invention, et les propriétés des fibres obtenues.

Les abréviations ainsi que les unités utilisées dans ce tableau 1 sont les suivantes:

N° Essai : numéro de l'essai de filage et de la fibre correspondante (référencé de A-1 à K-1);
C: concentration en cellulose dans la solution de filage (% en poids);
F: concentration en acide formique total dans la solution de filage (% en poids);
P : concentration en acide phosphorique dans la solution de filage (% en poids);
Tf: température de filage (en °C);
Ag: épaisseur de la couche d'air non coagulante (en mm);
Tc: température du milieu coagulant (en °C);
$\sigma_c$ : contrainte de tension subie par la fibre à la sortie des moyens de coagulation (en cN/tex);
Vf: vitesse de filage (en m/min);
Ti : titre de la fibre (en tex);
Te: ténacité de la fibre (en cN/tex);
Ar: allongement à la rupture de la fibre (en %);
Mi: module initial de la fibre (en cN/tex);
Er: énergie à la rupture de la fibre (en J/g);
DS : degré de substitution de la cellulose en groupes formiate, dans la fibre (en %).

Dans ces différents essais de filage, l'emploi d'une même lettre (par exemple A) pour des fibres différentes signifie que ces fibres ont été obtenues à partir d'une même solution : les 4 fibres A-1 à A-4 par exemple ont été filées à partir d'une même solution de filage (A) de concentrations C = 22 %, F = 18 % et P = 60 %, en faisant varier les différents paramètres de filage (Tf, Ag, Tc, ...).

Pour la réalisation de ces essais, on utilise notamment les conditions particulières suivantes:

- les 11 solutions de filage sont préparées à partir de cellulose en poudre (teneur initiale en eau égale à environ 8 % en poids, DP compris entre 500 et 600), d'acide formique et d'acide orthophosphorique contenant chacun environ 2,5 % en poids d'eau;
- toutes ces solutions sont optiquement anisotropes, et contiennent au total moins de 10 % d'eau (% en poids);
- les filières comportent 250 capillaires de forme cylindrique, de diamètre 50 ou 65 μm, sauf dans l'essai J où l'on utilise une filière de 200 capillaires;
- les valeurs de Tf sont comprises dans un domaine allant de 40°C à 60°C;
- les valeurs de FEF varient de 4 à 9 environ;
- l'eau de coagulation ne contient aucun additif, mis à part un éventuel agent tensio-actif (par exemple isopropanol pour les essais D-1 et D-2);
- le taux d'acide phosphorique, dans le milieu coagulant, est stabilisé à un niveau inférieur à 5 % (% en poids);
- l'eau de lavage est une eau industrielle à une température voisine de 15°C;
- le séchage de la fibre est réalisé par passage sur des cylindres chauffants à une
- température de 180°C;
- sur la fibre terminée, i.e. lavée et séchée, le taux d'acide phosphorique résiduel est inférieur à 0,1 % (% en poids de fibre sèche).

Le DP de la cellulose dans les solutions de filage, est compris entre 400 et 450, ce qui montre notamment une faible dépolymérisation après la mise en solution.

Le degré de substitution de la cellulose, dans les solutions, est en moyenne compris entre 30 et 50 % pour les solutions contenant 16 % à 22 % en poids de cellulose, entre 20 % et 30 % pour les solutions plus concentrées (plus de 22 % en poids de cellulose).

Toutes les propriétés mécaniques indiquées dans le tableau 1 sont des valeurs moyennes calculées sur 10 mesures, à l'exception du titre (moyenne sur 3 mesures), l'écart-type sur la moyenne (en % de cette moyenne) étant généralement compris entre 1 et 2,5 %.

A la lecture du tableau 1, on constate que toutes les fibres vérifient les relations suivantes:

$$DS \geq 2 \; ; \; Ar \geq 8 \; ; \; Te < 45 \; ; \; Mi > 500 ; Er > 10.$$

Les valeurs de DS sont comprises entre 20 % et 45 % ; en pratique elles sont quasiment identiques aux degrés de substitution mesurés sur les solutions de filage correspondantes.

On constate en outre que ces fibres en formiate de cellulose vérifient pour la plupart les relations préférentielles suivantes:

$$Ar \geq 10 \; ; \; Te \geq 25 \; ; \; Mi \geq 1000 \; ; \; Er \geq 15.$$

Plus préférentiellement, elles vérifient au moins une des relations suivantes:

$$Ar \geq 12 \; ; \; Te \geq 30 \; ; \; Mi \geq 1200 \; ; \; Er \geq 20.$$

Dans la majorité des exemples du tableau 1, le titre filamentaire (titre de la fibre Ti divisé par le nombre de filaments) est égal à environ 2,2 dtex (decitex). Mais ce titre peut varier dans une large mesure, par exemple de 1 dtex à 5 dtex ou plus, en ajustant de manière connue les conditions de filage. A titre d'exemple, les fibres B-1 et F-1 possèdent un titre filamentaire égal respectivement à 4,1 dtex et 3,7 dtex.

Ces fibres du tableau 1 sont toutes mises en oeuvre selon un procédé conforme à l'invention.

En particulier, la température Tc est toujours supérieure à 5°C et la contrainte de tension $\sigma_c$ est toujours inférieure à 5 cN/tex, les valeurs Ar et Er les plus élevées (par exemple Ar $\geq$ 10 et Er $\geq$ 20) étant généralement obtenues pour Tc supérieure à 10°C et $\sigma_c$ inférieure à 2 cN/tex.

## Tableau 1

| N° ESSAI | C % | F % | P % | Tf °C | Ag mm | Tc °C | σc cN/tex | Vf m/min | Ti tex | Te cN/tex | Ar % | Mi cN/tex | Er J/g | DS % |
|---|---|---|---|---|---|---|---|---|---|---|---|---|---|---|
| A-1 | 22 | 18 | 60 | 48 | 15 | 10 | < 5 | 150 | 56 | 31 | 8,3 | 1340 | 18,1 | 32 |
| A-2 | 22 | 18 | 60 | 48 | 20 | 20 | < 2 | 150 | 57 | 32 | 10,0 | 1240 | 21,1 | 33 |
| A-3 | 22 | 18 | 60 | 50 | 25 | 20 | < 2 | 150 | 56 | 32 | 10,8 | 1210 | 23,1 | 32 |
| A-4 | 22 | 18 | 60 | 50 | 30 | 20 | < 2 | 150 | 56 | 33 | 10,9 | 1230 | 23,6 | 32 |
| B-1 | 24 | 8 | 68 | 56 | 20 | 10 | < 5 | 100 | 102 | 22 | 8,6 | 1045 | 12,7 | 23 |
| B-2 | 24 | 8 | 68 | 44 | 30 | 20 | < 5 | 100 | 53 | 28 | 8,9 | 1340 | 17,7 | 22 |
| B-3 | 24 | 8 | 68 | 44 | 30 | 30 | < 5 | 100 | 53 | 26 | 8,8 | 1260 | 16,1 | 23 |
| C-1 | 24 | 17 | 59 | 45 | 10 | 22 | < 5 | 50 | 60 | 30 | 9,4 | 1270 | 23,0 | 28 |
| C-2 | 24 | 17 | 59 | 45 | 15 | 22 | < 5 | 50 | 59 | 29 | 9,9 | 1230 | 19,7 | 29 |
| C-3 | 24 | 17 | 59 | 45 | 30 | 22 | < 5 | 50 | 56 | 32 | 9,6 | 1315 | 20,5 | 28 |
| D-1 | 24 | 17 | 59 | 50 | 20 | 7 | < 5 | 150 | 53 | 34 | 8,7 | 1355 | 19,3 | 29 |
| D-2 | 24 | 17 | 59 | 50 | 20 | 7 | < 5 | 100 | 80 | 31 | 10,5 | 1165 | 20,7 | 29 |
| E-1 | 26 | 16 | 58 | 54 | 25 | 20 | < 5 | 150 | 51 | 31 | 8,8 | 1280 | 18,5 | 25 |
| E-2 | 26 | 16 | 58 | 54 | 25 | 20 | < 5 | 150 | 51 | 31 | 8,9 | 1270 | 18,6 | 26 |
| E-3 | 26 | 16 | 58 | 54 | 25 | 20 | < 5 | 150 | 52 | 26 | 8,8 | 990 | 15,4 | 25 |
| F-1 | 24 | 17 | 59 | 50 | 10 | 11 | < 5 | 50 | 93 | 27 | 9,2 | 1150 | 16,7 | 29 |
| F-2 | 24 | 17 | 59 | 50 | 10 | 20 | < 2 | 50 | 69 | 27 | 12,0 | 1065 | 21,8 | 30 |
| F-3 | 24 | 17 | 59 | 50 | 10 | 20 | < 2 | 50 | 57 | 27 | 11,9 | 1020 | 21,7 | 29 |
| G-1 | 24 | 17 | 59 | 43 | 5 | 20 | < 5 | 50 | 55 | 24 | 8,2 | 1100 | 14,1 | 29 |
| G-2 | 24 | 17 | 59 | 43 | 10 | 20 | < 2 | 50 | 55 | 26 | 10,0 | 1060 | 18,2 | 28 |
| G-3 | 24 | 17 | 59 | 43 | 15 | 20 | < 2 | 50 | 55 | 26 | 10,9 | 1015 | 19,5 | 29 |
| H-1 | 22 | 18 | 60 | 48 | 20 | 10 | < 5 | 150 | 55 | 32 | 8,0 | 1325 | 17,2 | 33 |
| H-2 | 22 | 18 | 60 | 48 | 20 | 20 | < 5 | 150 | 55 | 31 | 10,3 | 1190 | 21,7 | 32 |
| I-1 | 22 | 18 | 60 | 46 | 20 | 20 | < 5 | 150 | 54 | 32 | 8,4 | 1395 | 18,6 | 32 |
| J-1 | 16 | 19 | 65 | 40 | 20 | 18 | < 5 | 50 | 44 | 26 | 8,0 | 1025 | 13,0 | 42 |
| J-2 | 16 | 19 | 65 | 40 | 20 | 25 | < 5 | 50 | 44 | 24 | 8,1 | 990 | 13,0 | 43 |
| K-1 | 22 | 17 | 61 | 46 | 30 | 21 | < 5 | 150 | 54 | 32 | 8,5 | 1335 | 18,2 | 32 |

Dans tous ces exemples du tableau 1, la concentration C est comprise dans un domaine allant de 16 % à 26 %, et la concentration F est comprise dans un domaine allant de 8 % à 20 %. De préférence, le procédé de l'invention est mis en oeuvre avec des concentrations C très élevées, égales ou supérieures à 22 %, ce qui permet en général d'augmenter les valeurs de ténacités Te ; pour de telles concentrations C on préfère travailler avec F supérieure à 10 % car, pour des valeurs F inférieures, on a constaté que les solutions, qui ont alors une plus forte viscosité, pouvaient être plus difficiles à filer et conduire notamment à des ténacités plus faibles (voir par exemple essais B-1 à B-3).

D'autre part, les vitesses de filage sont élevées, puisqu'elles sont égales pour la plupart à 100 ou 150 m/min.

III-2.2. Fibres en cellulose régénérée (tableau 2):

On réalise 5 essais pour l'obtention de fibres en cellulose régénérée à partir du formiate de cellulose, conformément au procédé de l'invention et aux indications fournies au paragraphe II-3 précédent, à partir de 3 solutions de filage déjà utilisées pour les essais de filage précédents (solutions référencées A, F et I).

Le tableau 2 donne à la fois les conditions particulières de réalisation du procédé de l'invention, et les propriétés des fibres obtenues.

Les abréviations ainsi que les unités utilisées dans ce tableau 2 sont les suivantes:

N° Essai : numéro de l'essai et de la fibre correspondante (référencé de A-5 à I-2);

C, F, P, Tf. Ag, Tc, $\sigma_c$ : même signification que pour le tableau 1 précédent;

Cs: concentration en soude des moyens de régénération (% en poids);

Vr: vitesse de régénération (en m/min);

TI : titre de la fibre (en tex);

TE : ténacité de la fibre (en cN/tex);

AR : allongement à la rupture de la fibre (en %);

MI: module initial de la fibre (en cN/tex);

ER : énergie à la rupture de la fibre (en J/g);

DS : degré de substitution de la cellulose en groupes formiate, dans la fibre régénérée (en %).

Pour la réalisation de ces essais, on utilise notamment les conditions particulières suivantes:

- on met en oeuvre les étapes a) à e) du procédé de filage de l'invention et on régénère en ligne et en continu (Vr égale à Vf) les fibres en formiate sortant de la ligne de filage, lavées mais non séchées;
- ces fibres en formiate de cellulose de départ, dont un échantillon (quelques centaines de mètres) a été systématiquement prélevé en sortie de la ligne de filage, puis séché pour mesure des propriétés mécaniques, sont toutes conformes à l'invention, leur allongement à la rupture Ar, en particulier, étant au moins égal à 8 %;
- puis on traite la fibre en formiate par passage à travers des moyens de régénération, de lavage puis de séchage, la contrainte de tension $\sigma_r$ subie par la fibre à l'entrée de chacun de ces différents moyens étant dans tous les cas inférieure à 5 cN/tex, de préférence inférieure à 2 cN/tex;
- le milieu régénérant, utilisé à température ambiante (environ 20°C), est une solution aqueuse de soude dont la concentration en soude Cs varie selon les essais de 5 % à 30 % ;
- les moyens de régénération, de lavage, et de séchage sont constitués par des cabines équipées de cylindres motorisés sur lesquels vient s'enrouler la fibre à traiter;
- le lavage de la fibre est réalisé avec de l'eau industrielle à une température voisine de 15°C;
- le séchage de la fibre ainsi lavée est effectué par passage sur des cylindres chauffants à une température de 180°C;
- les temps de séjour dans les moyens de régénération sont de l'ordre de 15 s, comme dans les moyens de lavage, alors qu'ils sont de l'ordre de 10 s dans les moyens de séchage ;
- à la sortie des moyens de séchage, les fibres présentent un taux d'humidité résiduelle compris entre 12 % et 15 % (% en poids de fibre sèche).

Toutes les propriétés mécaniques indiquées dans le tableau 2 sont, comme pour le tableau 1, des valeurs moyennes calculées sur 10 mesures, à l'exception du titre (moyenne sur 3 mesures), l'écart-type sur la moyenne (en % de cette moyenne) étant généralement compris entre 1 et 2,5 %.

A la lecture du tableau 2, on constate que toutes les fibres vérifient les relations suivantes:

$$0 < DS < 2 \; ; \; AR \geq 8 \; ; \; TE < 45 \; ; \; MI > 500 \; ; \; ER > 10.$$

On constate en outre que ces fibres en cellulose régénérée vérifient pour la plupart l'ensemble des relations

préférentielles suivantes:

$$TE > 30 \; ; \; MI > 1200 \; ; \; ER > 15.$$

Dans les fibres de l'invention d'origine cristal-liquide, qu'elles soient en formiate de cellulose ou en cellulose régénérée à partir de ce formiate, les filaments présentent, sous microscope optique de polarisation, une structure en bande typique de leur origine cristal-liquide.

Une telle structure en bande ("banded structure" ou "pleated structure"), a été décrite par exemple pour des filaments de fibres aramides, issues elles aussi de manière connue de solutions cristal-liquide, dans les documents suivants: Journal of Polymer Science - Polymer Physics Edition - 18, 871-876 (1980); Journal of Applied Polymer Science - Applied Polymer Symposium - 41, 269-292 (1985).

## Tableau 2

| N° ESSAI | C % | F % | P % | Tf °C | Ag mm | Tc °C | $\sigma_c$ cN/tex | Cs % | Vr m/min | Tl tex | TE cN/tex | AR % | Ml cN/tex | ER J/g | DS % |
|---|---|---|---|---|---|---|---|---|---|---|---|---|---|---|---|
| A-5 | 22 | 18 | 60 | 50 | 25 | 20 | < 2 | 8 | 150 | 51 | 33 | 8,4 | 850 | 16,0 | 1,1 |
| A-6 | 22 | 18 | 60 | 50 | 30 | 20 | < 2 | 30 | 150 | 49 | 34 | 8,6 | 1210 | 18,5 | 0,4 |
| A-7 | 22 | 18 | 60 | 48 | 30 | 21 | < 2 | 30 | 150 | 48 | 35 | 8,3 | 1380 | 18,7 | 0,2 |
| F-4 | 24 | 17 | 59 | 45 | 12 | 11 | < 5 | 5 | 50 | 50 | 32 | 8,1 | 1320 | 16,6 | 0,1 |
| I-2 | 22 | 18 | 60 | 50 | 30 | 23 | < 5 | 30 | 150 | 53 | 34 | 8,0 | 1555 | 18,1 | 0,3 |

EP 0 958 413 B1

Cette structure particulière, figée lors de la formation du filament (i.e. au cours de la coagulation), est en quelque sorte la photographie de l'état de relaxation, plus ou moins marqué selon l'élasticité de la solution cristal-liquide, vers lequel évolue cette solution à la sortie des champs d'élongation développés dans la filière et dans l'air-gap.

Une telle structure en bande ne peut pas être visible, sous microscope optique de polarisation, sur des fibres de formiate de cellulose issues d'une solution de filage isotrope (non cristal-liquide).

Bien qu'elle puisse aussi ne pas être visible sur des fibres en formiate de cellulose d'origine cristal-liquide (absence de relaxation ou relaxation trop faible de la solution), cette structure particulière, lorsqu'elle est présente, est un indicateur sûr d'une origine cristal-liquide pour ce type de solution.

De manière inattendue, on a constaté que les fibres de l'invention ayant un allongement à la rupture au moins égal à 8 % montrent toutes sous microscope optique de polarisation cette structure en bande, alors qu'une telle structure n'est généralement pas visible, sous microscope optique de polarisation, sur des fibres coagulées dans l'acétone selon l'enseignement de la demande WO85/05115 précitée, ces fibres ayant quant à elles de faibles valeurs d'allongement à la rupture.

III-2. FIBRES NON CONFORMES A L'INVENTION (Tableau 3)

On réalise au total 11 essais de filage, non conformes à l'invention, deux de ces essais (F-5 et F-6) étant suivis en continu d'un traitement direct sur la ligne de régénération (Cs = 30 %) utilisée pour les essais du tableau 2 précédent.

Toutes les fibres obtenues sont donc des fibres en formiate de cellulose, à l'exception des fibres F-5 et F-6 qui sont en cellulose régénérée (DS inférieur à 2 %).

Ces 11 fibres sont obtenues à partir de 7 solutions de filage différentes déjà utilisées pour les essais précédents (solutions référencées A à D, F, H à J).

Le tableau 3 donne à la fois les conditions particulières de réalisation et les propriétés des fibres obtenues. Les abréviations et les unités sont les mêmes que pour le tableau 1 précédent, à la différence près que les symboles Ti, Te, Ar, Mi et Er correspondent pour les essais F-5 et F-6 aux propriétés mécaniques d'une fibre en cellulose régénérée.

Pour la réalisation de ces essais, on utilise des procédés de filage et le cas échéant de régénération conformes à ceux de l'invention, à l'exception d'une des deux conditions particulières suivantes: la température Tc n'est pas supérieure à 5°C ou la contrainte $\sigma_c$ est supérieure à 5 cN/tex.

## Tableau 3

| N° ESSAI | C % | F % | P % | Tf °C | Ag mm | Tc °C | $\sigma_c$ cN/tex | Vf m/min | Ti tex | Te cN/tex | Ar % | Mi cN/tex | Er J/g | DS % |
|---|---|---|---|---|---|---|---|---|---|---|---|---|---|---|
| A-8 | 22 | 18 | 60 | 48 | 15 | 1 | < 5 | 150 | 56 | 31 | 6,2 | 1380 | 13,5 | 33 |
| B-4 | 24 | 8 | 68 | 52 | 20 | 1 | < 5 | 150 | 53 | 27 | 6,1 | 1400 | 11,2 | 22 |
| B-5 | 24 | 8 | 68 | 56 | 20 | 5 | < 5 | 100 | 102 | 23 | 7,0 | 1140 | 10,8 | 23 |
| C-4 | 24 | 17 | 59 | 45 | 40 | 22 | > 5 | 50 | 58 | 32 | 6,9 | 1510 | 15,5 | 29 |
| C-5 | 24 | 17 | 59 | 45 | 50 | 22 | > 5 | 50 | 58 | 30 | 6,2 | 1480 | 13,0 | 28 |
| D-3 | 24 | 17 | 59 | 50 | 30 | 1 | < 5 | 150 | 51 | 34 | 6,8 | 1480 | 15,2 | 28 |
| F-5 | 24 | 17 | 59 | 50 | 45 | 11 | > 5 | 50 | 49 | 31 | 7,5 | 1280 | 15,3 | 0,2 |
| F-6 | 24 | 17 | 59 | 50 | 55 | 11 | > 5 | 50 | 49 | 32 | 7,1 | 1370 | 14,8 | 0,3 |
| H-3 | 22 | 18 | 60 | 48 | 20 | 2 | < 5 | 150 | 55 | 32 | 6,4 | 1370 | 13,7 | 33 |
| I-3 | 22 | 18 | 60 | 46 | 45 | 20 | > 5 | 150 | 54 | 31 | 7,7 | 1380 | 16,5 | 33 |
| J-3 | 16 | 19 | 65 | 45 | 15 | 2 | < 5 | 50 | 44 | 28 | 7,1 | 1060 | 13,3 | 42 |

EP 0 958 413 B1

**EP 0 958 413 B1**

On constate que ces fibres, malgré des propriétés intéressantes de ténacité ou en particulier de module initial, ne sont pas conformes à l'invention, aucune d'entre elles n'ayant en particulier un allongement à la rupture au moins égal à 8 %.

En outre, ces fibres du tableau 3, pour la majorité d'entre elles, ne présentent pas sous microscope optique de polarisation, une structure en bande telle que décrite précédemment pour les fibres conformes à l'invention. On a constaté en particulier que l'utilisation de contraintes de tensions $\sigma_c$ ou $\sigma_r$ élevées lors du filage et/ou de la régénération, par exemple de l'ordre de 5-10 cN/tex ou plus, entraînant une chute de l'allongement à la rupture (Ar ou AR) en dessous de 8 %, s'accompagnait le plus souvent de la disparition de la structure en bande. Ce phénomène est vraisemblablement dû au fait que des tensions trop élevées peuvent bloquer la relaxation de la solution au cours de la coagulation ou, lorsque la structure en bande est présente sur une fibre en formiate, entraîner un déplissement dé cette dernière au cours de la régénération et la faire ainsi disparaître.

En conclusion, les fibres de l'invention se caractérisent par une combinaison de propriétés qui est nouvelle et inattendue pour des fibres à base de formiate de cellulose d'origine cristal-liquide: allongement à la rupture au moins égal à 8 %, ténacité égale ou supérieure et module initial nettement supérieur à ceux d'une fibre viscose conventionnelle. Les fibres de l'invention, comparées à ces fibres viscose, présentent en outre l'avantage d'être produites à l'aide d'un procédé non polluant, à des vitesses de filage élevées.

Bien entendu, l'invention n'est pas limitée aux exemples précédemment décrits.

C'est ainsi par exemple que différents constituants peuvent être éventuellement ajoutés aux constituants de base précédemment décrits (cellulose, acide formique, acides phosphoriques, eau de coagulation), sans que l'esprit de l'invention soit modifié. Les constituants supplémentaires, de préférence chimiquement non réactifs avec les constituants de base, peuvent être par exemple des plastifiants, des ensimages, des colorants, des polymères autres que la cellulose susceptibles éventuellement d'être estérifiés pendant la réalisation de la solution ; il peut s'agir également de produits permettant par exemple d'améliorer la filabilité des solutions de filage ou les propriétés d'usage des fibres obtenues.

Le terme "formiate de cellulose" utilisé dans ce document couvre les cas où les groupes hydroxyle de la cellulose sont substitués par d'autres groupes que les groupes formiate, en plus de ces derniers, par exemple des groupes esters, notamment des groupes acétate, le degré de substitution de la cellulose en ces autres groupes étant de préférence inférieur à 10 %.

Enfin, les termes "filage" ou "fibres" doivent être pris dans un sens très général, ces termes couvrant aussi les films obtenus à partir de solutions cristal-liquide de formiate de cellulose.

**Revendications**

**1.** Fibre en formiate de cellulose d'origine cristal-liquide, **caractérisée par** les propriétés suivantes:

a) sous microscope optique de polarisation, ses filaments présentent une structure en bande typique de son origine cristal-liquide;

b) elle vérifie les relations suivantes:

$$DS \geq 2 \; ; \; Ar \geq 8 \; ; \; Te < 45 \; ; \; Mi > 500 \; ; \; Er > 10,$$

DS étant le degré de substitution de la cellulose en groupes formiate dans la fibre (en %), Ar l'allongement à la rupture (en %) de la fibre, Te sa ténacité (en cN/tex), Mi son module initial (en cN/tex) et Er son énergie à la rupture (en J/g).

**2.** Fibre selon la revendication 1, vérifiant les relations suivantes:

$$Ar \geq 10; \; Te \geq 25 \; ; \; Mi \geq 1000 \; ; \; Er \geq 15.$$

**3.** Fibre selon la revendication 2, vérifiant au moins l'une des relations suivantes:

$$Ar \geq 12 \; ; \; Te \geq 30 \; ; \; Mi \geq 1200 \; ; \; Er \geq 20.$$

**4.** Procédé de filage d'une solution cristal-liquide de formiate de cellulose selon la méthode dite de "dry-jet-wet-spinning", pour l'obtention d'une fibre en formiate de cellulose conforme à l'une quelconque des revendications précédentes, **caractérisé en ce qu'**il comporte les étapes suivantes:

- a) on part d'une solution de formiate de cellulose dans au moins un acide phosphorique, cette solution étant optiquement anisotrope à température ambiante et au repos;
- b) on extrude cette solution à travers une filière à une température (notée Tf) telle que la solution est optiquement anisotrope si elle est au repos;
- c) on étire ensuite la solution ainsi extrudée à travers une couche non coagulante, de préférence de l'air;
- d) puis, par passage à travers des moyens de coagulation, on coagule la solution ainsi étirée dans de l'eau dont la température (notée Tc) est supérieure à 5°C, la contrainte de tension (notée $\sigma_c$) subie par la fibre, en sortie des moyens de coagulation, étant maintenue à une valeur inférieure à 5 cN/tex;
- e) on lave la fibre ainsi formée, et on la sèche éventuellement.

**5.** Procédé selon la revendication 4, dans lequel la concentration en cellulose (notée C) est comprise dans un domaine allant de 16 % à 26 % et la concentration en acide formique total (notée F) est comprise dans un domaine allant de de 8 % à 20 % (% en poids sur la base d'une cellulose non estérifiée).

**6.** Procédé selon la revendication 5, dans lequel C est égale ou supérieure à 22 %, et F est supérieure à 10 %.

**7.** Procédé selon l'une quelconque des revendications 4 à 6, dans lequel au moins une des caractéristiques suivantes est vérifiée:

- Tf est comprise dans un domaine allant de 40°C à 60°;
- Tc est supérieure à 10°C;
- $\sigma_c$ est inférieure à 2 cN/tex;
- l'épaisseur notée Ag de la couche non coagulante est comprise dans un domaine allant de 5 à 35 mm.

**8.** Procédé selon l'une quelconque des revendications 4 à 7, dans lequel l'eau de coagulation ne contient aucun additif, mis à part un éventuel agent tensio-actif.

**9.** Fibre en cellulose régénérée à partir du formiate de cellulose, dont le degré de substitution DS de la cellulose en groupes formiate est compris entre 0 et 2 %, obtenue après un traitement de régénération d'une fibre en formiate de cellulose conforme à l'une quelconque des revendications 1 à 3.

**10.** Fibre en cellulose régénérée à partir du formiate de cellulose, d'origine cristal-liquide, **caractérisée par** les propriétés suivantes:

a) sous microscope optique de polarisation, ses filaments présentent une structure en bande typique de son origine cristal-liquide;

b) elle vérifie les relations suivantes:

$$0 < DS < 2 \; ; \; AR \geq 8 \; ; \; TE < 45 \; ; \; MI > 500 \; ; \; ER > 10,$$

DS étant le degré de substitution de la cellulose en groupes formiate dans la fibre (en %), AR l'allongement à la rupture de la fibre (en %), TE sa ténacité (en cN/tex), MI son module initial (en cN/tex) et ER étant son énergie à la rupture (en J/g).

**11.** Fibre selon la revendication 10 vérifiant les relations suivantes:

$$TE > 30 \; ; \; MI > 1200 \; ; \; ER > 15.$$

**12.** Procédé d'obtention d'une fibre en cellulose régénérée conforme à l'une quelconque des revendications 10 ou 11, comportant les étapes suivantes:

- a) on part d'une fibre en formiate de cellulose conforme à l'une quelconque des revendications 1 à 3;
- b) on traite la fibre en formiate par passage à travers des moyens de régénération, de lavage puis de séchage, de telle manière que les contraintes de tension (notées $\sigma_r$) subies par la fibre à l'entrée de chacun desdits moyens soient inférieures à 5 cN/tex, de préférence inférieures à 2 cN/tex.

13. Procédé selon la revendication 12 dans lequel on utilise une solution aqueuse de soude dont la concentration est au plus égale à 5 % ou au moins égale à 16 % (% en poids).

14. Utilisation dans le domaine textile d'une fibre conforme à l'une quelconque des revendications 1 à 3 ou 9 à 11.


**Patentansprüche**

1. Faser aus Celluloseformiat flüssigkristalliner Herkunft, **gekennzeichnet durch** die folgenden Eigenschaften:

    a) unter dem Polarisationslichtmikroskop weisen ihre Filamente eine Bandenstruktur auf, die für ihre flüssigkristalline Herkunft typisch ist;

    b) sie erfüllt die folgenden Beziehungen:

$$SG \geq 2; Bd \geq 8; Bf < 45; Mi > 500; Ba > 10,$$

    wobei SG den Grad der Substitution der Cellulose mit Formiatgruppen (in %), Bd die Bruchdehnung der Faser (in %), Bf ihre Bruchfestigkeit (in cN/tex), Mi den anfangsbezogenen Modul (in cN/tex), und Ba die Brucharbeit (in J/g) bedeutet.

2. Faser nach Anspruch 1, die die folgenden Beziehungen erfüllt:

$$Bd \geq 10; Bf \geq 25; Mi \geq 1000; Ba \geq 15.$$

3. Faser nach Anspruch 2, die mindestens eine der folgenden Beziehungen erfüllt:

$$Bd \geq 12; Bf \geq 30; Mi \geq 1200; Ba \geq 20.$$

4. Verfahren zum Verspinnen einer flüssigkristallinen Celluloseformiat-Lösung nach dem sogenannten "dry-jet-wet-spinning"-Verfahren zur Herstellung einer Celluloseformiatfaser nach einem der vorhergehenden Ansprüche, **dadurch gekennzeichnet, daß** es die folgenden Schritte umfaßt:

    a) es wird von einer Lösung von Celluloseformiat in mindestens einer Phosphorsäure ausgegangen, wobei die Lösung bei Raumtemperatur und im Ruhezustand optisch anisotrop ist;
    b) die Lösung wird bei einer solchen Temperatur (als Ts bezeichnet) durch eine Düse extrudiert, daß die Lösung optisch anisotrop ist, wenn sie im Ruhezustand vorliegt;
    c) die auf diese Weise extrudierte Lösung wird durch eine nicht koagulierende Schicht, vorzugsweise Luft, verstreckt;
    d) durch Hindurchführen durch Einrichtungen zur Koagulation wird die verstreckte Lösung anschließend in Wasser, dessen Temperatur (als $T_K$ bezeichnet) über 5 °C liegt, koaguliert, wobei die am Auslaß der Einrichtungen zur Koagulation auf die Faser ausgeübte Zugspannung (als $\sigma_K$ bezeichnet) auf einem Wert unter 5 cN/tex gehalten wird;
    e) die gebildete Faser wird gewaschen und gegebenenfalls getrocknet.

5. Verfahren nach Anspruch 4, wobei die Cellulosekonzentration (als C bezeichnet) im Bereich von 16 bis 26 % und die Gesamtkonzentration der Ameisensäure (als A bezeichnet) im Bereich von 8 bis 20 % (Gew.-% auf der Basis einer nicht veresterten Cellulose) liegt.

6. Verfahren nach Anspruch 5, wobei C 22 % beträgt oder darüber liegt und A über 10 % liegt.

**7.** Verfahren nach einem der Ansprüche 4 bis 6, wobei mindestens eine der folgenden Eigenschaften erfüllt wird:

- Ts liegt im Bereich von 40 bis 60 °C;
- $T_K$ liegt über 10 °C;
- $\sigma_K$ liegt unter 2 cN/tex;
- die als $D_L$ bezeichnete Dicke der nicht-koagulierenden Schicht liegt im Bereich von 5 bis 35 mm.

**8.** Verfahren nach einem der Ansprüche 4 bis 7, wobei das Wasser zur Koagulation abgesehen von einem gegebenenfalls vorliegenden grenzflächenaktiven Stoff keine Zusatzstoffe enthält.

**9.** Aus Celluloseformiat regenerierte Cellulosefaser, die nach der Regenerierung einer erfindungsgemäßen Celluloseformiatfaser nach einem der Ansprüche 1 bis 3 erhalten wird, wobei der Grad der Substitution SG der Cellulose mit Formiatgruppen im Bereich von 0 bis 2 % liegt.

**10.** Cellulosefaser, die aus Celluloseformiat flüssigkristalliner Herkunft regeneriert wurde, **gekennzeichnet durch** die folgenden Eigenschaften:

a) unter dem Polarisationslichtmikroskop zeigen die Filamente eine Bandenstruktur, die für ihre flüssigkristalline Herkunft typisch ist;

b) sie erfüllt die folgenden Beziehungen:

$$0 < SG < 2;\ Bd \geq 8;\ Bf < 45;\ Mi > 500;\ Ba > 10,$$

wobei SG den Grad der Substitution der Cellulose **durch** Formiatgruppen in der Faser (in %), Bd die Bruchdehnung (in %), Bf die Bruchfestigkeit (in cN/tex), Mi den anfangsbezogenen Modul (in cN/tex), und Ba die Brucharbeit (in J/g) bedeutet.

**11.** Faser nach Anspruch 10, die die folgenden Beziehungen erfüllt:

$$Bf>30;\ Mi>1200;\ Ba> 15.$$

**12.** Verfahren zur Herstellung einer Faser aus regenerierter Cellulose nach einem der Ansprüche 10 oder 11, das die folgenden Schritte umfaßt:

a) es wird von einer Faser aus Celluloseformiat nach einem der Ansprüche 1 bis 3 ausgegangen;
b) die Formiatfaser wird durch Hindurchführen durch Einrichtungen zur Regenerierung, zum Waschen und zum Trocknen so behandelt, daß die am Einlaß der Einrichtungen jeweils auf die Faser ausgeübten Zugspannungen (als $\sigma_R$ bezeichnet) unter 5 cN/tex und vorzugsweise unter 2 cN/tex liegen.

**13.** Verfahren nach Anspruch 12, wobei eine wäßrige Natriumhydroxidlösung verwendet wird, deren Konzentration höchstens 5 % oder mindestens 16 % (Gew.-%) beträgt.

**14.** Verwendung einer Faser nach einem der Ansprüche 1 bis 3 oder 9 bis 11 im Textilbereich.

**Claims**

**1.** A cellulose formate fibre of liquid-crystal origin, **characterised by** the following properties:

a) under an optical polarising microscope, its filaments have a banded structure typical of its liquid-crystal origin;

b) it satisfies the following relationships:

$$DS \geq 2; Ar \geq 8; Te < 45; Mi > 500; Er > 10,$$

DS being the degree of substitution of the cellulose with formate groups in the fibre (in %), Ar the elongation at break (in %) of the fibre, Te its tenacity (in cN/tex), Mi its initial modulus (in cN/tex) and Er its energy at break (in J/g).

2. A fibre according to Claim 1, which satisfies the following relationships:

$$Ar \geq 10; Te \geq 25; Mi \geq 1000; Er \geq 15.$$

3. A fibre according to Claim 2, which satisfies at least one of the following relationships:

$$Ar \geq 12; Te \geq 30; Mi \geq 1200; Er \geq 20.$$

4. A process for spinning a liquid-crystal solution of cellulose formate using what is called the "dry-jet-wet-spinning" method, for obtaining a cellulose formate fibre according to any one of the preceding claims, **characterised in that** it comprises the following steps:

   a) the starting point is a solution of cellulose formate in at least one phosphoric acid, this solution being optically anisotropic at ambient temperature and at rest;

   b) this solution is extruded through a spinneret at a temperature (Tf) such that the solution is optically anisotropic if it is at rest;

   c) the solution thus extruded is then stretched through a non-coagulating layer, preferably air;

   d) then, by passing through coagulation means, the solution thus stretched is coagulated in water, the temperature (Tc) of which is greater than 5°C, the tensile stress ($\sigma_c$) to which the fibre is subjected upon emerging from the coagulation means being kept at a value of less than 5 cN/tex;

   e) the fibre thus formed is washed, and may possibly be dried.

5. A process according to Claim 4, in which the cellulose concentration (C) lies within a range from 16% to 26%, and the total formic acid concentration (F) lies within a range from 8% to 20% (% by weight on the basis of a non-esterified cellulose).

6. A process according to Claim 5, in which C is equal to or greater than 22%, and F is greater than 10%.

7. A process according to any one of Claims 4 to 6, in which at least one of the following characteristics is satisfied:

   - Tf lies within a range from 40°C to 60°C;
   - Tc is greater than 10°C;
   - $\sigma_c$ is less than 2 cN/tex;
   - the thickness Ag of the non-coagulating layer lies within a range from 5 to 35 mm.

8. A process according to any one of Claims 4 to 7, in which the coagulation water does not contain any additive, with the possible exception of a surfactant.

9. A fibre of cellulose regenerated from cellulose formate, of which the degree of substitution DS of the cellulose with formate groups is between 0 and 2%, obtained after a regeneration treatment of a cellulose formate fibre according to any one of Claims 1 to 3.

10. A fibre of cellulose regenerated from cellulose formate, of liquid-crystal origin, **characterised by** the following properties:

a) under an optical polarising microscope, its filaments have a banded structure typical of its liquid-crystal origin;

b) it satisfies the following relationships:

$$0 < DS < 2;\ AR \geq 8;\ TE < 45;\ MI > 500;\ ER > 10,$$

DS being the degree of substitution of the cellulose with formate groups in the fibre (in %), AR the elongation at break of the fibre (in %), TE its tenacity (in cN/tex), MI its initial modulus (in cN/tex) and ER its energy at break (in J/g).

11. A fibre according to Claim 10, which satisfies the following relationships:

$$TE > 30;\ MI > 1200;\ ER > 15.$$

12. A process for obtaining a regenerated cellulose fibre according to any one of Claims 10 or 11, comprising the following steps:

a) the starting point is a cellulose formate fibre according to any one of Claims 1 to 3;
b) the formate fibre is treated by passing through regeneration means, washing means and then drying means, such that the tensile stresses ($\sigma_r$) to which the fibre is subjected at the entry to each of said means are less than 5 cN/tex, preferably less than 2 cN/tex.

13. A process according to Claim 12, in which an aqueous sodium hydroxide solution is used, the concentration of which is at most equal to 5% or at least equal to 16% (% by weight).

14. The use in the field of textiles of a fibre according to any one of Claims 1 to 3 or 9 to 11.